## Europäisches Patentamt

## European Patent Office

## Office européen des brevets

(19)

(11) Numéro de publication: **0 233 798 B1**

## FASCICULE DE BREVET EUROPEEN

(12)

(45) Date de publication du fascicule du brevet:
27.09.89

(51) Int. Cl.⁴: **F 02 K 1/82**

(21) Numéro de dépôt: **87400066.4**

(22) Date de dépôt: **14.01.87**

(54) **Canal à flux froid d'inverseur de poussée de turboreacteur multiflux associé à des moyens combinés de prélèvements d'air.**

(30) Priorité: **17.01.86 FR 8600597**

(43) Date de publication de la demande:
**26.08.87 Bulletin 87/35**

(45) Mention de la délivrance du brevet:
**27.09.89 Bulletin 89/39**

(84) Etats contractants désignés:
**DE FR GB IT**

(56) Documents cités:
**FR-A- 929 925**
**FR-A- 2 490 731**
**FR-A- 2 496 763**
**GB-A- 723 406**
**GB-A- 858 525**
**GB-A- 1 114 147**
**US-A- 2 635 419**
**US-A- 3 464 705**
**US-A- 4 355 507**

(73) Titulaire: **HISPANO-SUIZA Société anonyme dite:,
333, Bureaux de la Colline, F-92213 Saint Cloud (FR)**

(72) Inventeur: **Gely, Jean Marie Louis, 154, Boulevard
Clémenceau, F-76600 Le Havre (FR)**

(74) Mandataire: **Moinat, François, S.N.E.C.M.A. Service des
Brevets Boîte Postale 81, F-91003 Evry Cédex (FR)**

ACTORUM AG

# Description

L'invention concerne un canal à flux froid d'inverseur de poussée de turboréacteur multiflux équipé d'un dispositif de prélèvements d'air combinés.

Dans les turboréacteurs modernes, la recherche de hautes performances conduit à des températures élevées de fonctionnement nécessitant des actions de refroidissement à l'air de diverses pièces fortement sollicitées ou zones particulièrement chaudes. Pour les turboréacteurs dont les domaines d'utilisation amènent à les équiper d'un inverseur de poussée qui peut notamment être associé au flux froid dans les moteurs à double flux, il est ainsi habituel d'effectuer des prélèvements d'air au niveau du canal à flux froid d'inverseur de poussée. FR-A-2 490 731 décrit par exemple la structure générale d'un inverseur de poussée monté sur le canal à flux froid d'un turboréacteur multiflux.

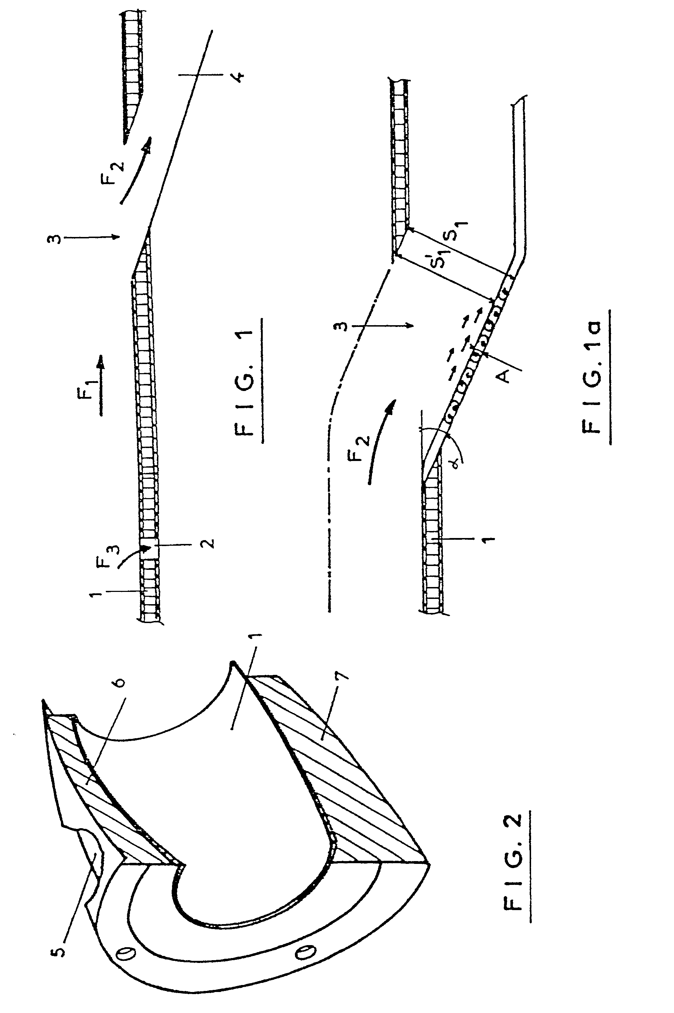

Ces prélèvements d'air sont généralement répartis selon une disposition longitudinale, vue selon une génératrice du canal à flux froid, le long de la paroi de canal, suivant la destination de l'air prélevé. La paroi de canal comporte ainsi notamment des orifices périphériquement répartis à partir desquels est assurée la ventilation du compartiment chaud situé entre la paroi du canal à flux froid et le carter du moteur interne, cette paroi constituant l'enveloppe du générateur de gaz du turboréacteur. De cette manière est également assuré un refroidissement de la surface interne de ladite paroi ainsi que de la surface externe dudit carter et de divers accessoires qui y sont fixés généralement. Le canal comporte encore des entrées d'air qui peuvent être de divers types, par exemple à affleurement ou du genre écopes dynamiques et à partir desquelles un conduit achemine l'air prélevé vers un des points choisis qui doit être refroidi, comme par exemple, au niveau de la turbine du moteur, pour la ventilation de la nacelle, ou encore vers l'avion généralement dans ce dernier cas, après être passé à travers un échangeur thermique où circule l'air à haute pression prélevé pour les besoins de l'avion. Ces prélèvements peuvent être effectués sur l'une quelconque des parois du canal d'inverseur: paroi interne, paroi externe, îlot supérieur ou îlot inférieur. Dans ces dispositifs connus, les prélèvements d'air sont effectués séparément. La figure 1 du dessin annexé donne une représentation schématique d'un tel exemple de réalisation dans lequel 1 désigne la paroi radialement interne d'un canal à flux froid d'inverseur de poussée. Sur cette paroi 1 sont ménagés des trous 2 et en aval, longitudinalement espacées, des entrées d'air 3 du genre affleurant qui se prolongent par un conduit 4 de guidage de l'air vers des zones à refroidir, ventilées ou pressurisées sur l'avion ou sur des parties du moteur. La flèche F1 désigne le flux froid circulant dans le canal, F2 le prélèvement principal effectué par les entrées d'air 3 et F3 le prélèvement secondaire effectué par les trous 2. Le prélèvement d'air F3 effectué par les trous 2 est notamment utilisé pour la ventilation de l'enveloppe à l'intérieur de laquelle est placé le générateur de gaz ou partie primaire du turboréacteur.

Ces modes de réalisation de type connu présentent les inconvénients occasionnés par la persistance de couches limites visqueuses dans les écoulements d'air prélevés, ce qui en diminue notablement l'efficacité pour obtenir de bonnes caractéristiques de refroidissement ou de ventilation. La figure 1a schématise ainsi une entrée d'air 3 dans laquelle une inclinaison $\alpha$ supérieure à 15 degrés recherchée pour améliorer l'efficacité de la captation entraîne l'apparition de couches perturbées A. On constate que, par rapport à une section théorique de captation $S_1$, la section efficace $S'_1$ est réduite. En fait, la pression moyenne sur la hauteur de la veine fluide prélevée est également abaissée par l'influence des couches limites pour lesquelles vitesses d'écoulement et pressions totales sont diminuées. Les performances globales de l'ensemble s'en trouvent ainsi diminuées. On connaît également par FR-A-2 496 763 un agencement de distribution d'air pressurisé à l'intérieur de moteurs à turbine à gaz, notamment qui permet d'alimenter sélectivement en air pressurisé à haute énergie et à basse énergie des composants du moteur où l'air présente le niveau d'énergie le plus efficace.

L'invention vise à éviter les divers inconvénients des dispositifs connus.

Un canal à flux froid d'inverseur de poussée de turboréacteur multiflux du genre précité est caractérisé selon l'invention en ce qu'un premier moyen constitué par une entrée d'air ouverte sur ladite paroi interne et formant un prélèvement principal est associé dans la même zone dudit canal avec un second moyen disposé en aval du bord amont de ladite entrée d'air et en position radialement interne par rapport à ladite entrée d'air et par lequel s'effectue l'aspiration de couches limites de l'écoulement de manière à former un prélèvement secondaire.

Avantageusement, le second moyen peut être constitué par une fente transversale ménagée sur le plancher d'une entrée d'air à parois parallèles affleurant à la paroi du canal.

Selon un autre mode avantageux, l'entrée d'air du prélèvement principal présente un becquet en saillie associé à des cornières latérales et à un carénage arrière et une rangée frontale de trous dans la paroi du canal, en aval du bord amont dudit becquet, constitue le second moyen de prélèvement.

D'autres avantages et caractéristiques de l'invention seront mieux compris à l'aide de la description qui va suivre de modes de réalisation d'un canal à flux froid d'inverseur de poussée de turboréacteur multiflux équipé d'un dispositif de prélèvements d'air combinés conforme à l'invention. Cette description est faite en référence aux dessins annexés, dans lesquels:

— la figure 1, précédemment décrite, représente une vue schématique partielle d'un canal à flux froid d'un genre connu,

— la figure 1a précédemment décrite schématise une veine fluide prélevée selon la disposition de la figure 1,

— la figure 2 est une vue schématique en perspective d'une moitié de canal à flux froid d'inverseur de poussée, selon l'invention,

— la figure 3 est une vue partielle schématique, selon une coupe longitudinale passant par l'axe du turboréacteur, avec perspective, d'un canal à flux froid d'inverseur de poussée montrant les moyens combinés de prélèvements d'air, représentant un premier mode de réalisation de l'invention,

— la figure 3a schématise une veine fluide de prélèvement selon la disposition de la figure 3,

— la figure 4 est une vue partielle schématique, analogue à la figure 3, représentant un second mode de réalisation de l'invention,

— la figure 4a schématise une veine fluide de prélèvement selon la disposition de la figure 4.

Selon la représentation schématique de la figure 1, un canal à flux froid d'inverseur de poussée de turboréacteur multiflux comporte une paroi radialement interne 1 et une paroi radialement externe 5. Le canal d'inverseur représenté est du type «canal en C» dont seule une moitié est représentée. Les parois 1 et 5 sont réunies, en forme de C à la partie supérieure, par une paroi verticale de liaison 6 dénommée îlot supérieur et à la partie inférieure, par une paroi verticale de liaison 7 dénommée îlot inférieur. Les deux parois radialement internes 1 des ensembles en C forment un capot primaire qui constitue l'enveloppe externe d'un compartiment chaud dans lequel est logé le générateur de gaz ou partie primaire du turboréacteur qui n'a pas été représenté aux dessins.

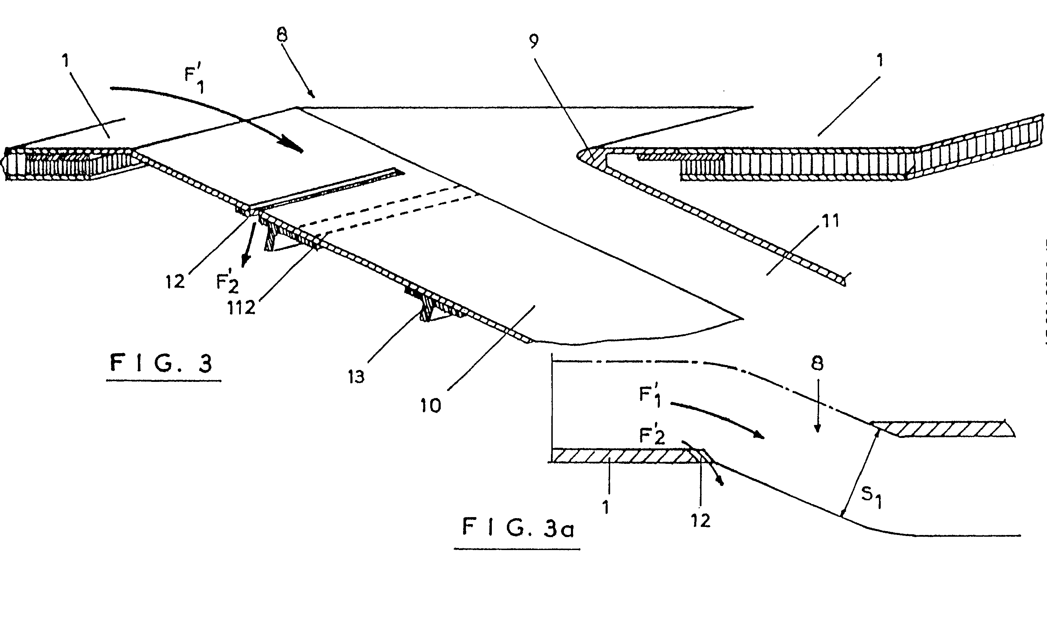

Selon un premier mode de réalisation de l'invention représenté à la figure 3, sur la paroi interne 1 du canal à flux froid est ménagée une entrée d'air 8 à parois parallèles. Cette entrée d'air 8 se raccorde à la paroi 1 par une lèvre affleurante 9 et la représentation partielle donnée au dessin montre un plancher 10 et une paroi latérale 11. Sur le plancher 10, à faible distance de l'entrée, est pratiquée une fente transversale 12. Par cette fente 12 sont aspirées les couches limites les plus proches du plancher 10 dans le prélèvement principal $F'_1$ effectué par l'entrée d'air 8. Cette aspiration donne naissance à un prélèvement secondaire $F'_2$ qui traverse la fente 12 et qui peut être utilisée pour la ventilation du compartiment chaud situé entre la paroi 1 et le générateur de gaz du turboréacteur logé à l'intérieur. A proximité de la fente 12 et en aval par rapport au sens de circulation du prélèvement principal $F'_1$, le plancher 10 comporte sur sa face externe un raidisseur transversal 13 qui constitue un déflecteur pour l'écoulement du prélèvement secondaire $F'_2$. D'autres utilisations du prélèvement secondaire $F'_2$ peuvent également être prévues. En particulier, la fente 12 peut être raccordée à un conduit permettant de guider ce flux vers des zones à ventiler ou refroidir, par exemple au niveau de parties chaudes du moteur ou d'organes de commande.

La figure 3a schématise l'influence du prélèvement secondaire $F'_2$ et l'effet obtenu sur le prélèvement principal $F'_1$. En écartant la zone de prélèvement de la paroi 1, la pression moyenne obtenue sur la section de la veine prélevée est supérieure à celle qui a été obtenue dans la réalisation représentée à la figure 1 et selon la figure 1a. Dans cette zone de prélèvement en effet, le profil des vitesses est plus régulier et les vitesses supérieures à ce qui est obtenu au voisinage de la paroi. Les perturbations observées selon la figure 1a sont évitées et dans l'entrée d'air 8, l'écoulement est recollé à la paroi au-delà de la fente 12 de prélèvement secondaire $F'_2$ et on retrouve une section efficace $S_1$ complète de captation. Les parois de l'entrée d'air 8 au lieu d'être parallèles peuvent être divergentes et elles peuvent être planes ou courbes.

Au lieu d'être transversale par rapport à la direction de l'écoulement principal $F'_1$, comme représentée à la figure 3, la fente 12 peut recevoir d'autres orientations selon les caractéristiques particulières observées sur l'écoulement et selon l'effet recherché par le prélèvement secondaire $F'_2$. Selon ces caractéristiques, la fente peut également être placée sur une autre paroi de l'entrée d'air 8. Un diaphragme mobile de réglage du débit peut être associé à la fente 12. Une ou plusieurs rangées de trous pratiqués dans le plancher 10 peuvent être substituées à la fente 12 et sont représentées en traits fins 112 sur la figure 3.

Le prélèvement secondaire $F'_2$ peut encore être effectué au niveau d'un conduit de guidage de l'air du prélèvement principal $F'_1$ au-delà de l'entrée d'air 8.

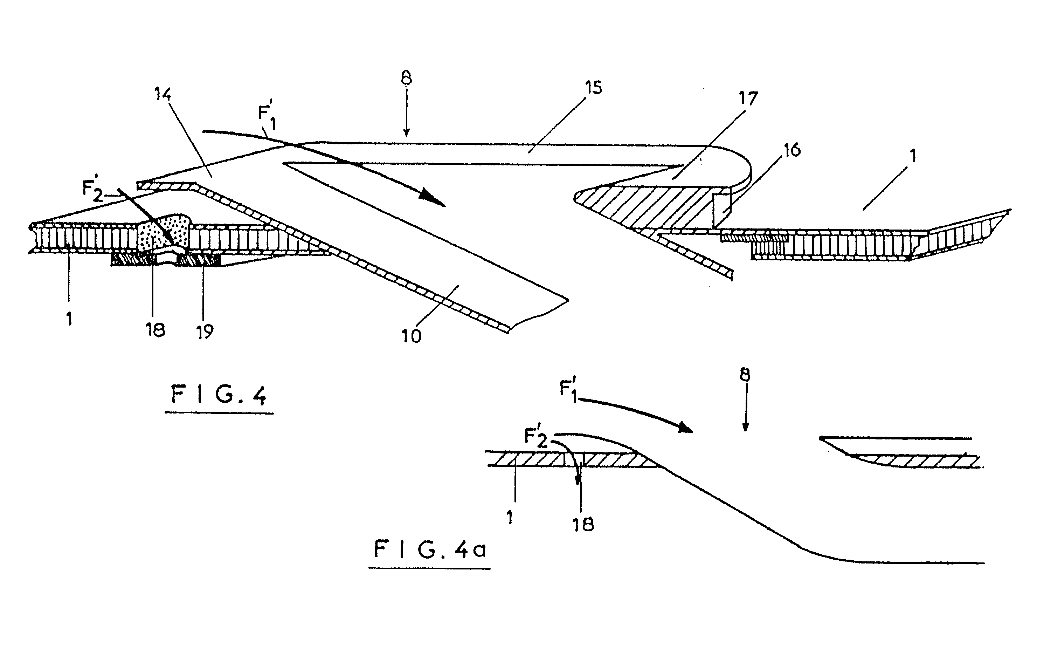

Selon un deuxième mode de réalisation de l'invention représenté à la figure 4, le plancher 10 de l'entrée d'air comporte une partie en saillie par rapport à la paroi 1, à l'entrée, formant un becquet 14 qui coopère avec des cornières latérales 15 qui le relient à un carénage arrière 16. L'entrée d'air 8 est raccordée à la paroi 1 par une lèvre surélevée 7. Au moyen de cette disposition, l'écoulement principal du flux froid dans le canal au contact de la paroi radialement interne 1 est défléchie par le becquet 14, canalisée par les cornières latérales 15 et éjectée par le carénage arrière 16 à partir duquel un mélange avec le flux principal est obtenu. Afin de réduire l'effet néfaste de traînée produit sur l'écoulement principal de flux froid, un profil adapté de raccordement à la paroi 1 est donné au carénage arrière 16.

A proximité et en amont du becquet 14, la paroi comporte une rangée frontale de trous 18 qui aspirent une partie des couches limites du flux principal de manière à former un prélèvement secondaire destiné aux mêmes utilisations que dans le premier mode de réalisation, notamment à la ventilation du compartiment chaud situé entre la paroi radialement interne du canal à flux froid et le générateur de gaz du turboréacteur.

La figure 4a schématise l'entrée d'air 8 et la veine de prélèvement principal $F'_1$ qui, comme dans le premier mode de réalisation, est écarté de la paroi 1, reportant ainsi le prélèvement dans une zone où les vitesses d'écoulement sont supérieures, conduisant à une pression moyenne de la veine prélevée supérieure.

Ce second mode de réalisation présente l'avantage d'un traitement amélioré du flux d'air par une élimination plus efficace des couches limites d'où il résulte une amélioration des performances obtenues par les prélèvements et par le flux principal. Ce mode de réalisation permet également une meilleure élimination d'éléments parasites nuisant à l'efficacité de l'utilisation des prélèvements (humidité, poussière, corps étrangers).

Comme précédemment, diverses variantes de réalisation peuvent être prévues. En particulier, les prélèvements secondaires toujours directement combinés avec le prélèvement principal peuvent recevoir diverses localisations, latérales ou arrière par rapport à l'entrée d'air et divers moyens équivalents de prélèvement, par fentes ou orifices, peuvent être utilisés.

Comme pour le premier mode de réalisation également, un réglage du débit peut être associé aux moyens de prélèvement secondaire. La figure 4 représente ainsi une plaque mobile 19 à trous calibrés associée aux trous 18 d'aspiration.

En outre, une fente 12 de prélèvement complémentaire telle qu'elle est utilisée dans le premier mode de réalisation peut être associée aux dispositions du second mode.


## Revendications

1. Canal à flux froid d'inverseur de poussée de turboréacteur multiflux composé d'une paroi interne (1), d'une paroi externe (5), d'un îlot supérieur (6) et d'un îlot inférieur (7) et comportant, sur l'une au moins desdites parois, des moyens de prélèvement d'air, cet air étant destiné au refroidissement, à la pressurisation ou à la ventilation de l'avion ou de diverses zones du turboréacteur, caractérisé en ce qu'un premier moyen constitué par une entrée d'air (8), ouverte sur ladite paroi interne (1) et formant un prélèvement principal (F'₁) est associé dans la même zone dudit canal avec un second moyen (12; 18) disposé en aval du bord amont de ladite entrée d'air (8) et en position radialement interne par rapport à ladite entrée d'air (8) et par lequel s'effectue l'aspiration de couches limites de l'écoulement de manière à former un prélèvement secondaire (F'₂).

2. Canal à flux froid comportant des moyens de prélèvement d'air selon la revendication 1, caractérisé en ce que l'entrée d'air (8) constituant le premier moyen de prélèvement principal (F'₁) situé sur ladite paroi interne (1) du canal est à parois parallèles et elle est affleurante à cette paroi (1) et se prolonge par un conduit de guidage de l'air vers son point d'utilisation pour le refroidissement.

3. Canal à flux froid selon la revendication 2, caractérisé en ce que le second moyen (12) de prélèvement secondaire (F'₂) est placé sur le plancher (10) de l'entrée d'air (8) dans sa partie amont par rapport au sens de circulation de l'air.

4. Canal à flux froid selon la revendication 3, caractérisé en ce que le second moyen de prélèvement secondaire (F'₂) est constitué par une fente transversale (12).

5. Canal à flux froid selon la revendication 3, caractérisé en ce que le second moyen de prélèvement secondaire (F'₂) est constitué par au moins une rangée transversale de trous (112) dans le plancher (10) de l'entrée d'air (8).

6. Canal à flux froid selon l'une quelconque des revendications 3, 4 et 5, caractérisé en ce que, en aval du second moyen (12) de prélèvement secondaire (F'₂), la face externe du plancher (10) de l'entrée d'air (8) porte un raidisseur transversal (13) qui constitue un déflecteur du flux de prélèvement secondaire (F'₂).

7. Canal à flux froid comportant des moyens de prélèvement d'air selon la revendication 1, caractérisé en ce que l'entrée d'air (8) constituant le premier moyen de prélèvement principal d'air (F'₁) situé sur ladite paroi interne (1) du canal comporte une partie en saillie sous forme d'un becquet (14) associé à des cornières latérales (15) et à un carénage arrière (16) de manière à défléchir une première partie des couches limites, à la canaliser et la mélanger au flux principal.

8. Canal à flux froid selon la revendication 7, caractérisé en ce que le second moyen de prélèvement est placé en aval du bord amont du becquet (14) en saillie et est constitué par une rangée frontale de trous (18) dans ladite paroi (1) du canal.

9. Canal à flux froid selon l'une quelconque des revendications précédentes, caractérisé en ce qu'un moyen de réglage (19) du débit d'air prélevé est associé au second moyen (18) de prélèvement secondaire (F'₂).


## Patentansprüche

1. Mantelstromkanal für den Schubumkehrer eines Turboluftstrahltriebwerks, der aus einer inneren Wandung (1), einer äusseren Wandung (5), einer oberen Verbindungswand (6) und einer unteren Verbindungswand (7) besteht und an wenigstens einer der genannten Wandungen Mittel zur Entnahme von Luft aufweist, die für die Kühlung, die Druckhaltung oder die Ventilation des Flugzeugs oder von verschiedenen Zonen des Turboluftstrahltriebwerks bestimmt ist, dadurch gekennzeichnet, dass ein aus einem auf der inneren Wandung (1) offenen und eine Hauptentnahme (F'₁) bildenden Lufteinlass (8) bestehendes erstes Mittel in derselben Zone des Kanals mit einem zweiten Mittel (12; 18) kombiniert ist, das stromabwärts des stromaufwärtigen Randes des Lufteinlasses (8) in einer gegenüber diesem radial inneren Position angeordnet ist und über das die Ansaugung der Grenzschichten der Strömung erfolgt, so dass es eine Sekundärentnahme (F'₂) bildet.

2. Mantelstromkanal mit Mitteln zur Luftentnahme nach Anspruch 1, dadurch gekennzeichnet, dass der Lufteinlass (8), der das auf der inneren Wandung (1) des Kanals liegende erste Mittel zur Hauptentnahme (F'₁) bildet, parallele Wandungen besitzt, die bündig in die innere Wandung (1) eingelassen sind und von einer Leitung verlängert sind, die die Luft zur Kühlung zu dem Verbrauchspunkt führt.

3. Mantelstromkanal nach Anspruch 3, dadurch gekennzeichnet, dass das die Sekundär-

entnahme (F'$_2$) bildende zweite Mittel (12) auf der Bodenwandung (10) des Lufteinlasses (8) in dem relativ zur Richtung der Luftzirkulation stromaufwärtigen Teil angeordnet ist.

4. Mantelstromkanal nach Anspruch 3, dadurch gekennzeichnet, dass das die Sekundärentnahme (F'$_2$) bildende zweite Mittel von einem transversalen Schlitz (12) gebildet ist.

5. Mantelstromkanal nach Anspruch 3, dadurch gekennzeichnet, dass das die Sekundärentnahme (F'$_2$) bildende zweite Mittel von wenigstens einer transversalen Reihe von Löchern (112) in der Bodenwandung (10) des Lufteinlasses (8) gebildet ist.

6. Mantelstromkanal nach einem der Ansprüche 3, 4 und 5, dadurch gekennzeichnet, dass die Aussenseite der Bodenwandung (10) des Lufteinlasses (8) stromabwärts des die Sekundärentnahme (F'$_2$) bildenden zweiten Mittels (12) eine transversale Versteifungsrippe (13) trägt, die eine Ablenkvorrichtung für die Strömung der Sekundärentnahme (F'$_2$) bildet.

7. Mantelstromkanal mit Mitteln zur Luftentnahme nach Anspruch 1, dadurch gekennzeichnet, dass der Lufteinlass (8), der das auf der inneren Wandung (1) des Kanals liegende erste Mittel zur Hauptentnahme (F'$_1$) bildet, ein vorstehendes Teil in Form eines Spoilers (14) aufweist, der mit seitlichen Winkelprofilen (15) und einer hinteren Verkleidung (16) so kombiniert ist, dass ein erster Teil der Grenzschichten abgelenkt, kanalisiert und mit der Hauptströmung gemischt wird.

8. Mantelstromkanal nach Anspruch 7, dadurch gekennzeichnet, dass das zweite Mittel zur Luftentnahme stromabwärts des stromaufwärtigen Randes des vorstehenden Spoilers (14) angeordnet ist und aus einer frontalen Reihe von Löchern (18) in der inneren Wandung (1) des Kanals besteht.

9. Mantelstromkanal nach einem der vorhergehenden Ansprüche, dadurch gekennzeichnet, dass dem die Sekundärentnahme (F'$_2$) bildenden zweiten Mittel (18) ein Mittel (19) zur Durchsatzregelung der entnommenen Luft zugeordnet ist.

## Claims

1. A cold-flow duct of a thrust reverser of a multi-flow turbojet, the duct comprising an inner wall (1), an outer wall (5), an upper block (6) and a lower block (7) and comprising air intake means on at least one of the afore-mentioned walls, the air being adapted to cool, pressurise or ventilate the aircraft or various areas of the turbojet, characterised in that a first means comprising an air inlet (8) opening on to the inner wall (1) and forming a main intake (F'$_1$) is associated in the same area of the duct with a second means (12; 18) disposed downstream of the upstream edge of the air inlet (8) and in a radially inner position relative to the air inlet (8) and through which the boundary layers of the flow are sucked so as to form a secondary intake (F'$_2$).

2. A cold-flow duct comprising air intake means according to claim 1, characterised in that the air inlet (8) constituting the first or main intake means (F'$_1$) situated on the inner wall (1) of the duct has parallel walls and is flush with the wall (1) and is prolonged by a conduit for guiding the air to the place where it is used for cooling.

3. A cold-flow duct according to claim 2, characterised in that the second means (12) constituting a secondary intake (F'$_2$) is disposed on the floor (10) of the air intake (8) and in the upstream part thereof relative to the air flow direction.

4. A cold-flow duct according to claim 3, characterised in that the second or secondary intake means (F'$_2$) comprises a transverse slot (12).

5. A cold-flow duct according to claim 3, characterised in that the second or secondary intake means (F'$_2$) comprises at least one transverse row of holes (112) in the floor (10) of the air inlet (8).

6. A cold-flow duct according to any of claims 3, 4 or 5, characterised in that, downstream of the second means (12) constituting the secondary intake (F'$_2$), the outer surface of the floor (10) of the air inlet (8) bears a transverse stiffener (13) which deflects the flow from the secondary intake (F'$_2$).

7. A cold-flow duct comprising air intake means according to claim 1, characterised in that the air inlet (8) constituting the first or main air intake means (F'$_1$) situated on the inner wall (1) of the duct has a projecting part in the form of a beak (14) associated with lateral angle members (15) and with rear streamlining (16) so as to deflect and canalise a first part of the boundary layers and mix it with the main flow.

8. A cold-flow duct according to claim 7, characterised in that the second intake means is disposed downstream of the upstream edge of the projecting beak (14) and comprises a front row of holes (18) in the duct wall (1).

9. A cold-flow duct according to any of the preceding claims, characterised in that a means (19) for adjusting the flow rate of intaken air is associated with the second means (18) constituting a secondary intake (F'$_2$).

FIG. 1

FIG. 1a

FIG. 2

FIG. 3

FIG. 3a

EP 0 233 798 B1

F I G. 4

F I G. 4a

EP 0 233 798 B1